# EUROPEAN PATENT APPLICATION

(11) **EP 4 418 256 A1**
(43) Date of publication of application: **21.08.2024**
(21) Application number: 24152949.4
(22) Date of filing: 19.01.2024
(51) Int. Cl.: G09G 5/10

(54) **DISPLAY DEVICE AND METHOD OF IMPROVING VISIBILITY OF IMAGE THEREFOR**

(30) Priority: 15.02.2023 KR 20230019889
(71) Applicant: LX Semicon Co., Ltd., Daejeon 34027 (KR)
(72) Inventor: HEO, Jun Ho, 34027 Daejeon (KR); KIM, Yong Hee, 34027 Daejeon (KR); SONG, Byung Cheol, 34027 Daejeon (KR); YU, Seung Wan, 34027 Daejeon (KR); LEE, Seung Hyun, 34027 Daejeon (KR); LEE, Jun Min, 34027 Daejeon (KR); LEE, Ji Won, 34027 Daejeon (KR); LEE, Hee Jin, 34027 Daejeon (KR); JEONG, Se Ha, 34027 Daejeon (KR)
(74) Representative: Goddar, Heinz J.

(57) **Abstract**

The present disclosure discloses a display device improving the visibility of an image and a method of improving the visibility of an image therefor. The display device can improve the visibility of an image by implementing a global compensation and a local compensation adaptively to content that is represented in an image.

## Description

### BACKGROUND

### 1. Technical Field

The present disclosure relates to a technology for improving the visibility of an image, and more particularly, to a display device that improves the visibility of an image and a method of improving the visibility of an image therefor.

### 2. Related Art

A display panel may display an image by mixing luminance information and color information.

An image of the display panel may have different visibility depending on brightness for each region. Illustratively, a bright region, a middle brightness region, and a dark region may have different visibilities. The visibility of each of the bright region and the dark region is lower than that of the middle brightness region.

Accordingly, it is necessary to develop a technology capable of improving the visibility of an image.

In general, in order to improve the visibility of an image, a method of extracting luminance information of the image and compensating for luminance information by considering a relation between the luminance information and ambient illumination may be taken into consideration. Furthermore, a method of compensating for luminance information of an image depending on whether the luminance information of the image is greater than a preset threshold value may be taken into consideration.

A common method of improving the visibility of an image is to correct luminance by using very simple image characteristics. Therefore, the common method of improving the visibility of an image has a limit in solving a visibility problem that occurs due to complex elements, and has a problem in that the common method does not propose an effective solution for a local compensation.

Accordingly, there is a difficulty in displaying an image having high quality through the display panel due to the problem.

### SUMMARY

Various embodiments are directed to providing a display device capable of improving the visibility of an image and a method of improving the visibility of an image therefor.

Various embodiments are directed to providing a display device capable of improving the visibility of an image through a global compensation and a local compensation for an image and a method of improving the visibility of an image therefor.

Various embodiments are directed to providing a display device capable of the visibility of an image by implementing a global compensation that is adaptive to content displayed in an image and a method of improving the visibility of an image therefor.

Various embodiments are directed to providing a display device capable of the visibility of an image according to a local compensation by incorporating the results of a global compensation that is adaptive to content displayed in an image into a local compensation and a method of improving the visibility of an image therefor.

In an embodiment, a display device may include a global visibility improvement unit configured to generate content information corresponding to content that is represented in an image by using input frame data for the image and to generate global compensation information by performing a global compensation using the input frame data, the content information, and an illumination signal of the image, and a local visibility improvement unit configured to generate local compensation information by performing a local compensation on the input frame data and to generate output frame data by blending the global compensation information and the local compensation information.

In an embodiment, a method of improving a visibility of an image for a display device may include generating content information including class information and image brightness level information corresponding to content that is represented in an image by using input frame data for the image, generating global compensation information by performing a global compensation on the input frame data by using the class information, the image brightness level information, and an illumination signal of the image, and generating output frame data by blending local compensation information and the global compensation information for the input frame data.

An embodiment of the present disclosure has an effect in that the visibility of an image can be improved adaptively to content that is represented in an image.

Furthermore, an embodiment of the present disclosure has effects in that the best visibility corresponding to content of an image and ambient illumination can be provided and improved visibility according to a global compensation and a local compensation can be provided by incorporating content characteristics into both the global compensation and the local compensation.

Furthermore, an embodiment of the present disclosure has an effect in that visibility according to an improved local compensation can be provided by incorporating the results of a global compensation that is adaptive to content displayed in an image into a local compensation.

Furthermore, an embodiment of the present disclosure has an effect in that an image having high quality can be provided by improving the visibility of the image as described above.

### BRIEF DESCRIPTION OF THE DRAWINGS

FIG. 1 is a block diagram illustrating an embodiment of a display device according to the present disclosure.
FIG. 2 is a detailed block diagram of a global visibility improvement unit illustrated in FIG. 1.
FIG. 3 is a detailed block diagram of an image characteristic information extractor illustrated in FIG. 2.
FIG. 4 is a detailed block diagram for describing a class analysis unit illustrated in FIG. 3.
FIG. 5 is a detailed block diagram for describing a global compensation graph data generator illustrated in FIG. 2.
FIG. 6 is a three-dimensional graph that exemplifies a test frame set illustrated in FIG. 5.
FIG. 7 is a diagram that exemplifies a global compensation graph.
FIG. 8 is a detailed block diagram of a global compensation operator illustrated in FIG. 2.
FIG. 9 is a graph that exemplifies a distribution of pixel values by a global compensation when image brightness level information has dark colors.
FIG. 10 is a graph that exemplifies a distribution of pixel values by a global compensation when image brightness level information has bright colors.
FIG. 11 is a detailed block diagram of a local visibility improvement unit illustrated in FIG. 1.
FIG. 12 is a detailed block diagram of a local contrast map provision unit illustrated in FIG. 11.
FIG. 13 is a diagram for describing a local contrast weighted map.
FIG. 14 is a table that exemplifies weights that are applied to the local contrast weighted map.
FIG. 15 is a detailed block diagram of an image blender illustrated in FIG. 11.

### DETAILED DESCRIPTION

A display device according to an embodiment of the present disclosure may be implemented to display an image on a display panel by providing display data.

Illustratively, in a common display system that displays an image, display data may be provided from a timing controller to a driver integrated circuit. The driver integrated circuit may provide a display panel with driving signals corresponding to the display data. The display panel may display an image corresponding to the driving signals.

In the above construction, the timing controller may be constructed to provide the display data to the display panel by compensating for the display data. Furthermore, the timing controller and the driver integrated circuit may each be embodied as a chip or may be embodied in one chip. Accordingly, an embodiment of the present disclosure may be implemented in the timing controller or may be implemented in a complex integrated circuit including the timing controller.

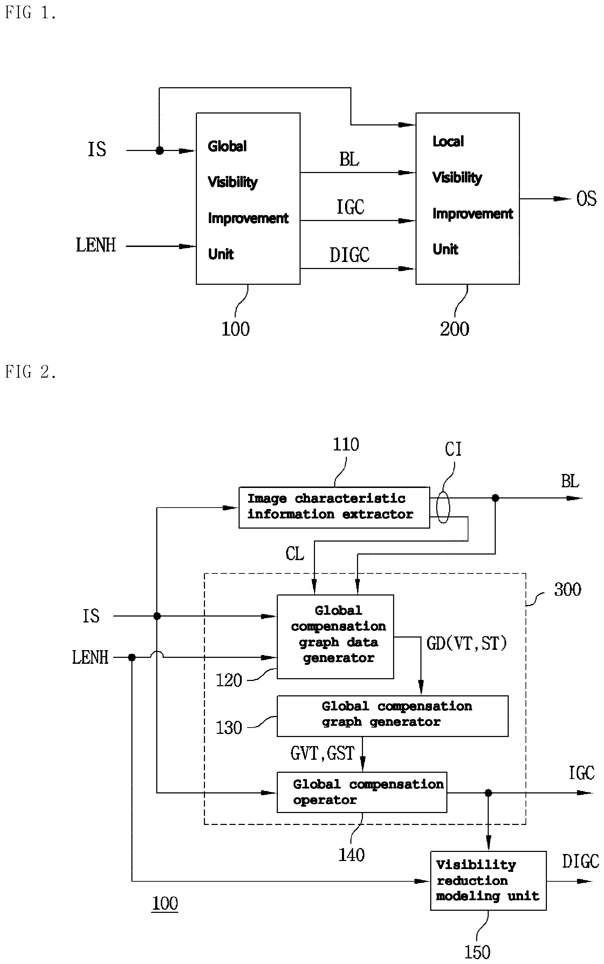

A display device according to an embodiment of the present disclosure may include parts for visibility improvements as illustrated in FIG. 1. Referring to FIG. 1, the display device may be implemented to include a global visibility improvement unit 100 and a local visibility improvement unit 200 in order to improve the visibility of an image.

The global visibility improvement unit 100 and the local visibility improvement unit 200 have been exemplified as some parts for visibility improvements of the display device. The display device may further include various parts for receiving display data for an image, compensating for the display data, and transmitting the display data to a display panel.

The global visibility improvement unit 100 and the local visibility improvement unit 200 may be embodied by using separate logic circuits, may be embodied as a microprocessor by programming, or may be embodied by mixing a logic circuit and a microprocessor.

In general, an illumination sensor (not illustrated) may be included in a display system (not illustrated) for visibility improvements, and may be constructed to sense ambient illumination of a display panel (not illustrated) and to provide an illumination signal LENH corresponding to the illumination. In an embodiment of the present disclosure, the illumination signal LENH may be understood as digital information that represents an analog sensing level.

The global visibility improvement unit 100 may be constructed to receive input frame data IS and the illumination signal LENH and to output image brightness level information BL, global compensation information IGC, and visibility reduction modeling information DIGC.

More specifically, the global visibility improvement unit 100 may be constructed to generate content information CI corresponding to content that is represented in an image by using the input frame data IS for the image and to generate the global compensation information IGC by performing a global compensation on the input frame data IS by using the content information CI and the illumination signal LENH of the image.

Furthermore, the global visibility improvement unit 100 may be constructed to generate the visibility reduction modeling information DIGC that is necessary for compensations for a preset high luminance region and preset low luminance region of the global compensation information IGC and to output the visibility reduction modeling information DIGC.

The local visibility improvement unit 200 may be constructed to receive the input frame data IS, the image brightness level information BL, the global compensation information IGC, and the visibility reduction modeling information DIGC and to output output frame data OS.

More specifically, the local visibility improvement unit 200 may be constructed to generate local compensation information ILC by performing a local compensation on the input frame data IS and to generate the output frame data OS converted from the input frame data IS by blending the global compensation information IGC and the local compensation information ILC.

Furthermore, the local visibility improvement unit 200 may be constructed to generate a local contrast map MLC obtained by normalizing a proportional relation between the visibility reduction modeling information DIGC and the input frame data IS, to generate a local contrast weighted map MLCW in which a weight corresponding to the image brightness level information BL has been applied to the local contrast map MLC, and to adjust blending for generating the output frame data OS by using the local contrast weighted map MLCW.

The global visibility improvement unit 100, among the components according to the embodiment of FIG. 1, may be implemented as illustrated in FIG. 2.

The global visibility improvement unit 100 may include an image characteristic information extractor 110 and a global visibility compensation unit 300.

The image characteristic information extractor 110 may include a first deep neural network (DNN) that has been modeled to determine the type of content that is represented in an image, but may be constructed to generate the content information CI corresponding to the content of the input frame data IS by the first DNN that uses the input frame data IS as an input. The content information CI may include class information CL corresponding to the content of the input frame data IS and the image brightness level information BL of the input frame data IS.

Illustratively, a thing may be basically displayed in content of an image, a scene may be basically displayed in content of an image, or graphic may be basically displayed in content of an image. An image may be divided as being basically displayed in content. Illustratively, an image may be divided into a thing image, a scene image, and a graphic image. The content of an image that is displayed as described above may be understood as the content of the input frame data IS. Therefore, the class information CL may be understood as having a value for identifying content, such as a "thing image, a scene image, or a graphic image" that is included in the input frame data IS.

Furthermore, brightness of an image may be divided into a plurality of levels. Illustratively, brightness of an image may be divided into "very dark, middle brightness, and very bright". Therefore, the image brightness level information BL may be understood as having a value for identifying a brightness level of an image.

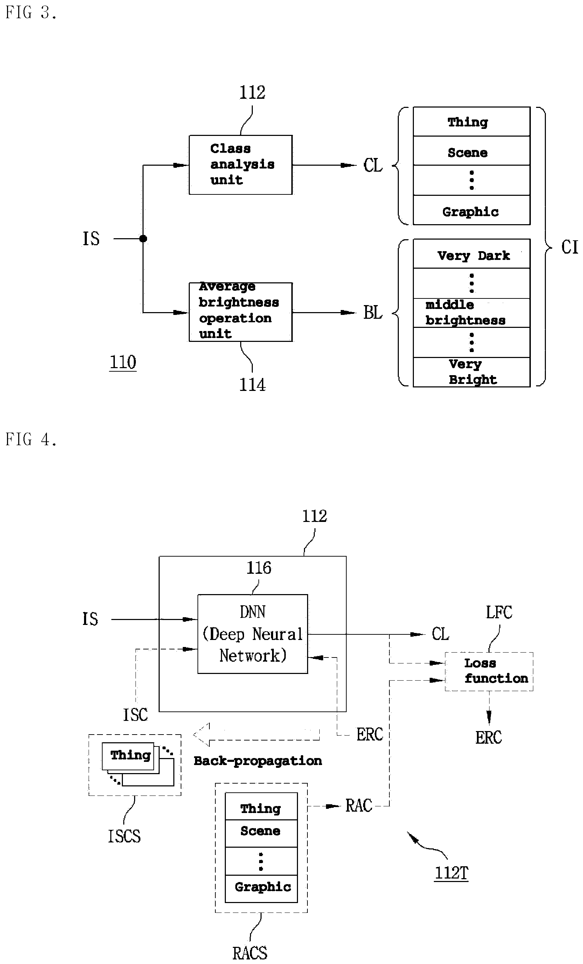

The image characteristic information extractor 110 may be described by further referring to FIG. 3.

The image characteristic information extractor 110 may include a class analysis unit 112 and an average brightness operation unit 114.

The class analysis unit 112 includes the first DNN that has been modeled in order to determine the type of content that is represented in an image, and may be constructed to receive the input frame data IS, to generate the class information CL corresponding to the content of the input frame data IS by the first DNN, and to output the class information CL.

That is, the class analysis unit 112 may provide the class information CL corresponding to content of an image. The class information CL may have a value corresponding to the content, among a plurality of preset values.

More specifically, the class analysis unit 112 may be implemented to include the first DNN as illustrated in FIG. 4. Hereinafter, the first DNN of the class analysis unit 112 is assigned reference numeral "116".

The first DNN 116 may have an input layer, a hidden layer, and an output layer, and may include a plurality of nodes for each layer. A weight may be set for each node. The modeling of the first DNN 116 may be variously constructed by a manufacturer, and thus an example of a detailed construction thereof is omitted.

The weight of the first DNN 116 for each node may be set by training. That is, the first DNN 116 is trained to calculate an output by an internal modeling structure in accordance with an input, to update the weights of the nodes while back-propagating (indicated by a dotted line arrow) an error between the output and a correct answer to the internal modeling structure, and to find an output approximate to the correct answer while repeating the process.

In FIG. 4, an input frame data set ISCS, a correct answer set RACS, and a loss function LFC exemplify a set 112T for the training of the first DNN 116. Prior to the test of the first DNN 116, initial weights may be set for the nodes of the first DNN 116.

A test frame data set ISCS may be understood as including a plurality of test frame data of various types of content for the training of the first DNN 116. Furthermore, the correct answer set RAGS includes correct answers RAC for each class, and may be understood as providing the correct answer RAC corresponding to a class in order to determine whether the class information CL of the first DNN 116 corresponds to the correct answer in a process of training the first DNN 116. Furthermore, the loss function LFC may be understood as a function for calculating an error ERC between the class information CL that is output by the first DNN 116 and the correct answer RAC.

The training of the first DNN 116 may be described as follows.

First, the test frame data ISC that are selected from the test frame data set ISCS are input to the first DNN 116 for the training of the first DNN 116. The first DNN 116 may output the class information CL corresponding to weights that have been set in the nodes of the input layer, the hidden layer, and the output layer that have been modeled therein.

The output class information CL may be compared with the correct answer RAC of the test frame data ISC in the loss function LFC. The loss function LFC may provide the first DNN 116 with the error ERC corresponding to a result of the comparison.

The error ERC may be back-propagated in order of the output layer, the hidden layer, and the input layer in the first DNN 116. The weights of the nodes of the first DNN 116 may be updated with a value for solving the error ERC in the back-propagation process of the error ERC.

When the training is repeated, the first DNN 116 may be stabilized to output the class information CL corresponding to a correct answer with respect to the test frame data ISC that are input thereto.

The first DNN 116 that is constructed in an embodiment of the present disclosure may be understood as having the weights of the nodes optimized based on the results of the training.

Therefore, when receiving the input frame data IS, the class analysis unit 112 may generate the class information CL corresponding to the content of the input frame data IS by the first DNN 116.

Furthermore, the average brightness operation unit 114 of the image characteristic information extractor 110 illustrated in FIG. 3 may be constructed to operate average brightness of the input frame data IS and to generate the image brightness level information BL as the results of the operation. The image brightness level information BL may be understood as having a value corresponding to the average brightness of the input frame data IS.

The global visibility compensation unit 300 included in the global visibility improvement unit 100 may be constructed to generate global compensation information IGC by performing a global compensation using the input frame data IS, the content information CI, and the illumination signal LENH of the image.

The global visibility compensation unit 300 may include a global compensation graph data generator 120, a global compensation graph generator 130, a global compensation operator 140, and a visibility reduction modeling unit 150.

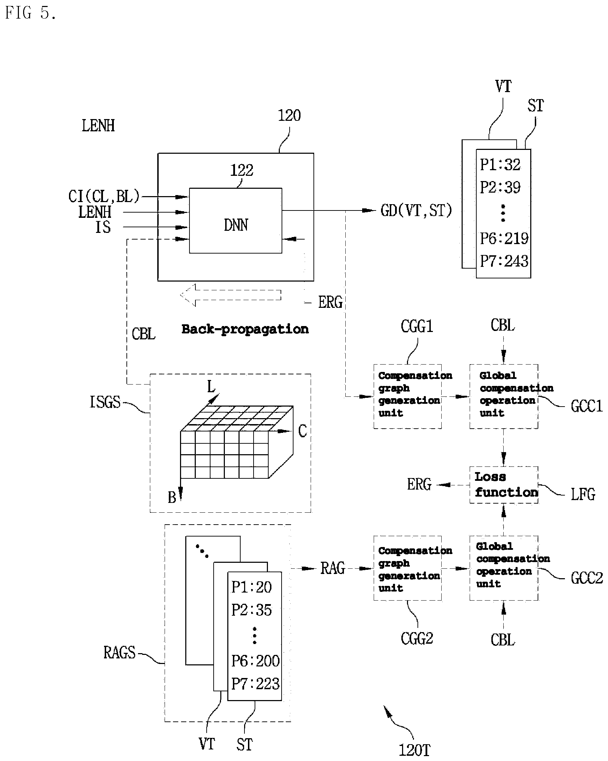

The global compensation graph data generator 120 may include a second DNN that has been modeled in order to generate global compensation graph data GD as illustrated in FIG. 5, and may be constructed to generate the global compensation graph data GD by the second DNN that uses the illumination signal LENH, the input frame data IS, and the content information CI as an input. Hereinafter, the second DNN of the global compensation graph data generator 120 is assigned reference numeral "122". In FIG. 5, the second DNN 122 has been illustrated as receiving the illumination signal LENH, the input frame data IS, and the content information CI. The second DNN 122 may change the input frame data IS in an RGB domain into the input frame data IS in an HSV domain. That is, the second DNN 122 may be constructed to use the input frame data IS in the HSV domain, the illumination signal LENH, and the content information CI as an input.

The global compensation graph data GD may include a brightness table VT and a chroma table ST. Illustratively, each of the brightness table VT and the chroma table ST may be set to have values corresponding to a plurality of preset levels in a luminance range in the RGB domain. Illustratively, the brightness table VT and the chroma table ST may each have values corresponding to a plurality of levels P1 to P7, respectively.

The second DNN 122 may also have an input layer, a hidden layer, and an output layer, and may include a plurality of nodes for each layer. A weight may be set for each node. The modeling of the second DNN 122 may be variously constructed by a manufacturer, and thus an example of a detailed construction thereof is omitted.

The weights of the second DNN 122 for each node may be set by training.

In FIG. 5, a test frame data set ISGS, a correct answer set RAGS, compensation graph generation units CGG1 and CGG2, global compensation operation units GCC1 and GCC2, and a loss function LFG exemplify a set 120T for the training of the second DNN 122. Prior to the test of the second DNN 122, initial weights may be set for the nodes of the second DNN 122.

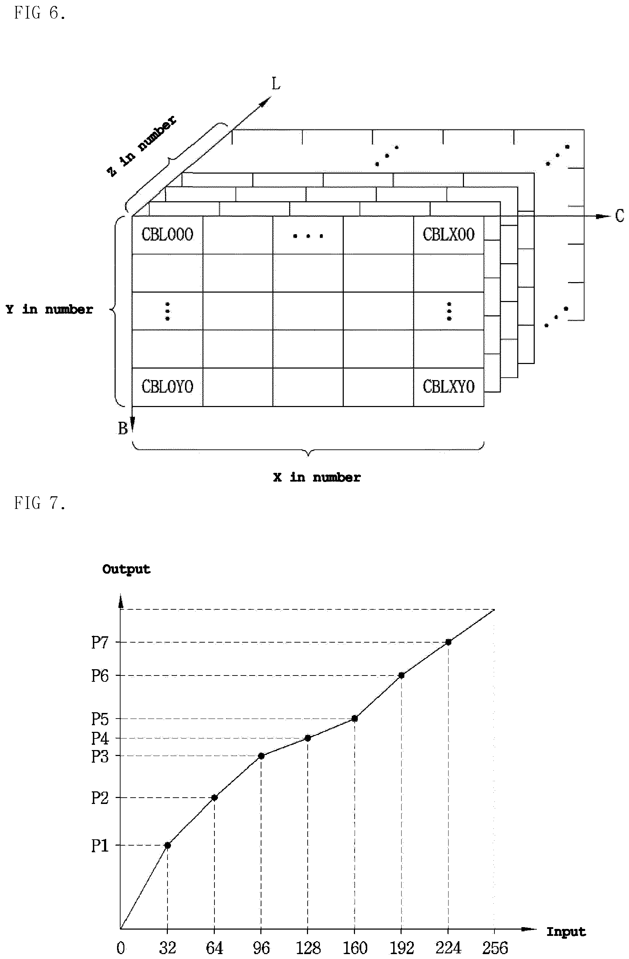

The test frame data set ISCS may be understood as including a plurality of test frame data CBL for the training of the second DNN 122. The plurality of test frame data CBL may consist of a three-dimensional table according to the illumination signal LENH and the class information CL and the image brightness level information BL that are included in the content information CI as illustrated in FIG. 6. An axis C corresponds to the class information CL. An axis B corresponds to the image brightness level information BL. An axis L corresponds to the illumination signal LENH.

The test frame data set ISCS may include the test frame data CBL corresponding to a plurality of types of class information CL, a plurality of types of image brightness level information BL, and a plurality of illumination signals LENH. The test frame data CBL may be represented as CBL000 to CBLXYZ in accordance with the coordinates of the test frame data set ISCS. Test frame data that are selected form the test frame data set ISCS are represented as CBL, for convenience of description.

Furthermore, the correct answer set RAGS may include correct answers RAG corresponding to the illumination signal LENH and the content information CI. In this case, each of the correct answers RAG may be understood as having the correct answer brightness table VT and the correct answer chroma table ST.

The compensation graph generation unit CGG1 is for generating a test global compensation graph corresponding to the test brightness table VT and the test chroma table ST that are output by the second DNN 122 by the training of the second DNN 122. The compensation graph generation unit CGG2 is for generating a correct answer global compensation graph corresponding to the correct answer brightness table VT and correct answer chroma table ST of the correct answer RAG.

The global compensation operation unit GCC1 is for generating test global compensation information to which a test compensation graph has been applied in the test frame data CBL. The global compensation operation unit GCC2 is for generating correct answer global compensation information to which a correct answer compensation graph has been applied in the test frame data CBL.

The loss function LFC may be understood as a function for calculating an error ERG between the test global compensation information and the correct answer global compensation information.

The training of the second DNN 122 may be described as follows.

First, the test frame data CBL that are selected from the test frame data set ISGS are input to the second DNN 122 for the training of the second DNN 122. The test frame data CBL may be understood as including the class information CL, the image brightness level information BL, and the illumination signal LENH. The second DNN 122 changes the test frame data CBL in the RGB domain into the test frame data CBL in the HSV domain, and may use the test frame data CBL in the HSV domain, the illumination signal LENH, and the content information CI as an input.

The second DNN 122 may use the test frame data CBL, the class information CL, the image brightness level information BL, and the illumination signal LENH as an input, and may output the test brightness table VT and the test chroma table ST corresponding to weights that have been set in the nodes of the input layer, the hidden layer, and the output layer that have been modeled therein.

Test global compensation information corresponding to the test brightness table VT and the test chroma table ST may be generated by the compensation graph generation unit CGG1 and the global compensation operation unit GCC1. Correct answer global compensation information corresponding to the correct answer brightness table VT and the correct answer chroma table ST may be generated by the compensation graph generation unit CGG2 and the global compensation operation unit GCC2.

The test global compensation information may be compared with correct answer global compensation information in the loss function LFG. The loss function LFG may provide the second DNN 122 with the error ERG corresponding to a result of the comparison.

The error ERG may be back-propagated in order of the output layer, the hidden layer, and the input layer in the second DNN 122. The weights of the nodes of the second DNN 122 may be updated with a value for solving the error ERG in the back-propagation process of the error ERG.

When the training is repeated, the second DNN 122 may be stabilized to output the global compensation graph data GD including the brightness table VT and the chroma table ST corresponding to a correct answer with respect to the class information CL of test frame data, the image brightness level information BL, and the illumination signal LENH that are input thereto.

The second DNN 122 that is constructed in an embodiment of the present disclosure may be understood as having the weights of the nodes optimized based on the results of the training.

Therefore, when receiving the illumination signal LENH, the input frame data IS, the class information CL, and the image brightness level information BL, the global compensation graph data generator 120 may generate the global compensation graph data GD including the brightness table VT and the chroma table ST by the second DNN 122.

In the global visibility improvement unit 100, the global compensation graph generator 130 may receive the global compensation graph data GD including the brightness table VT and the chroma table ST, and may generate a brightness global compensation graph GVT corresponding to the brightness table VT and a chroma global compensation graph GST corresponding to the chroma table ST.

The brightness global compensation graph GVT and the chroma global compensation graph GST may be understood as a global compensation graph. The global compensation graph may be understood with reference to FIG. 7. In the brightness global compensation graph GVT, a correlation between luminance levels of an input and the plurality of levels P1 to P7 of the brightness table VT corresponding to an output may be defined as illustrated in FIG. 7. Furthermore, in the chroma global compensation graph GST, a correlation between luminance levels of an input and the plurality of levels P1 to P7 of the chroma table ST may be defined as illustrated in FIG. 7.

In the global visibility improvement unit 100, the global compensation operator 140 may be constructed to output the global compensation information IGC that is obtained by operating the input frame data IS by using a global compensation graph that is provided by the global compensation graph generator 130.

More specifically, the global compensation operator 140 may be constructed to convert first brightness of the input frame data IS into second brightness by using the brightness global compensation graph GVT, to convert first chroma of the input frame data IS into second chroma by using the chroma global compensation graph GST, and to output the global compensation information IGC having values corresponding to the second brightness and the second chroma.

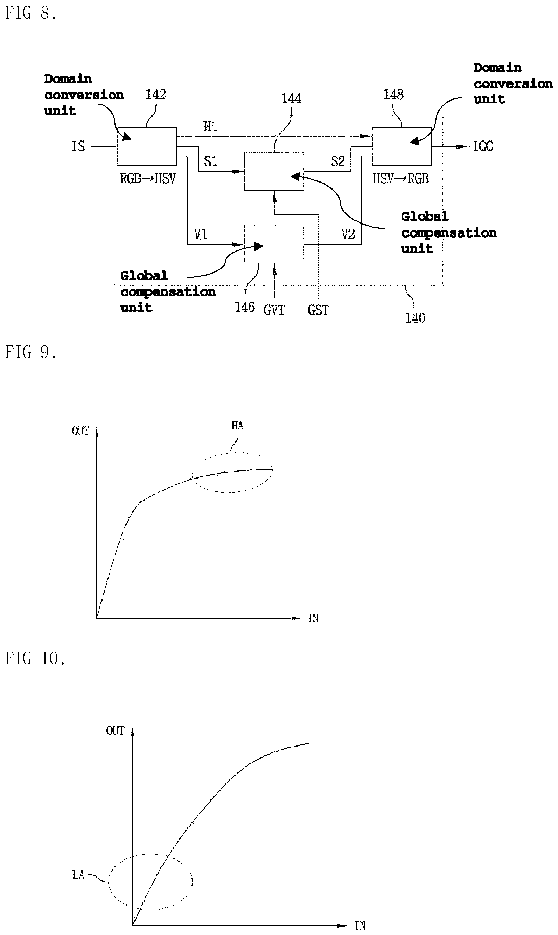

The global compensation operator 140 may be described with reference to FIG. 8.

The global compensation operator 140 may include domain conversion units 142 and 148 and global compensation units 144 and 146.

The domain conversion unit 142 may be constructed to convert the input frame data IS in the RGB domain into the input frame data IS in the HSV domain and to output a hue H1, first brightness V1, and first chroma S1 for the input frame data IS.

The global compensation unit 144 may be constructed to output second chroma S2 that is obtained by compensating for the first chroma S1 by using the chroma global compensation graph GST.

The global compensation unit 146 may be constructed to output second brightness V2 that is obtained by compensating for the first brightness V1 by using the brightness global compensation graph GVT.

The domain conversion unit 148 may be constructed to convert data in the HSV domain, including the hue HI, the second chroma S2, and the second brightness V2, into the data in the RGB domain and to output the global compensation information IGC in the RGB domain.

If a global compensation is performed on luminance components in the RGB domain, a phenomenon in which a color is distorted may occur. In order to prevent the distortion, the global compensation operator 140 according to an embodiment of the present disclosure may be constructed to change the input frame data IS into the input frame data IS in the HSV domain and to compensate for chroma and brightness in the HSV domain.

In the case of an image in which image brightness level information is distributed in dark colors, most of the pixel values of the image may be distributed in a low grayscale. If a global compensation is performed on an image having image brightness level information of dark colors, the global compensation operator 140 uses the brightness global compensation graph GVT and the chroma global compensation graph GST having a characteristic in which the visibility of the image is improved by increasing the brightness of the entire image. Therefore, as a result of the global compensation, contrast in a high grayscale region HA of the global compensation information IGC may be degraded as illustrated in FIG. 9.

In contrast, in the case of an image in which image brightness level information is distributed in bright colors, most of the pixel values of the image may be distributed in a high grayscale. If a global compensation is performed on an image having image brightness level information of bright colors, the global compensation operator 140 uses the brightness global compensation graph GVT and the chroma global compensation graph GST having a characteristic in which the visibility of the image is improved by reducing the brightness of the entire image. Therefore, as a result of the global compensation, contrast in a low grayscale region LA of the global compensation information IGC may be degraded as illustrated in FIG. 10.

Accordingly, it is necessary to improve visibility for the high grayscale region and low grayscale region of the global compensation information IGC. The visibility for the high grayscale region and the low grayscale region may be performed in a local compensation. It is necessary for a global compensation to provide visibility modeling information to be used in the local compensation.

To this end, in an embodiment of the present disclosure, the global visibility improvement unit 100 may include the visibility reduction modeling unit 150. The visibility reduction modeling unit 150 is constructed to receive the illumination signal LENH and the global compensation information IGC, to generate the visibility reduction modeling information DIGC that is necessary for compensations for a preset high luminance region and preset low luminance region of the global compensation information IGC, and to output the visibility reduction modeling information DIGC.

In this case, the visibility reduction modeling information DIGC may be understood as including first modeling information for compensating for the degradation of the high grayscale region HA in proportion to a degree that the contrast of the high grayscale region HA is degraded and second modeling information for compensating for the degradation of the low grayscale region LA in proportion to a degree that the contrast of the low grayscale region LA is degraded. The first modeling information and the second modeling information may each be set to have a value proportional to the illumination signal LENH.

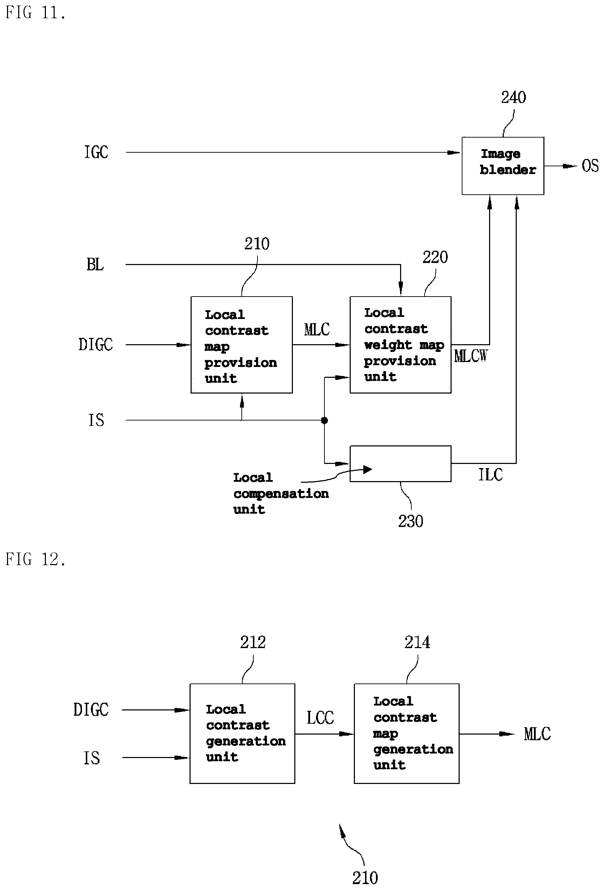

Among the components according to the embodiment of FIG. 1, the local visibility improvement unit 200 may be implemented as illustrated in FIG. 11.

The local visibility improvement unit 200 may include a local contrast map provision unit 210, a local contrast weighted map provision unit 220, a local compensation unit 230, and an image blender 240.

The local compensation unit 230 of the local visibility improvement unit 200 is for generating the local compensation information ILC by performing a local compensation on the input frame data IS.

The image blender 240 may generate the output frame data OS converted from the input frame data IS by blending the global compensation information IGC and the local compensation information ILC if the incorporation of system modeling information is not taken into consideration. In this case, the blending of the image blender 240 may be exemplified as the sum of the global compensation information IGC and the local compensation information ILC.

The local compensation unit 230 of the local visibility improvement unit 200 may perform a preset local compensation on the input frame data IS. The local compensation may be implemented by using various methods.

Illustratively, for the local compensation, each pixel may be defined as a center pixel. A preset unit area including the center pixel for each pixel of an image may be defined. For the local compensation, average luminance of a unit area may be calculated. If the average luminance of the unit area is high luminance or low luminance, luminance of the center pixel may be changed by applying a preset proportional expression. The luminance calculated by the proportional expression may be used as the local compensation information ILC.

The local compensation has been merely exemplified for understanding. In an embodiment of the present disclosure, the local compensation unit 230 may perform various local compensations which may be designed by a manufacturer, and may provide the local compensation information ILC corresponding to the results of the compensation.

In the local visibility improvement unit 200, the local contrast map provision unit 210 and the local contrast weighted map provision unit 220 may be understood as being constructed in order to improve visibility for the high grayscale region and low grayscale region of the global compensation information IGC.

To this end, the local contrast map provision unit 210 may be constructed to provide the local contrast map MLC that is obtained by normalizing a proportional relation between the visibility reduction modeling information DIGC and the input frame data IS. In this case, the visibility reduction modeling information DIGC may be understood as information that is necessary for compensations for a preset high luminance region and preset low luminance region of the global compensation information IGC.

The local contrast map provision unit 210 may be exemplified as including a local contrast generation unit 212 and a local contrast map generation unit 214 as illustrated in FIG. 12.

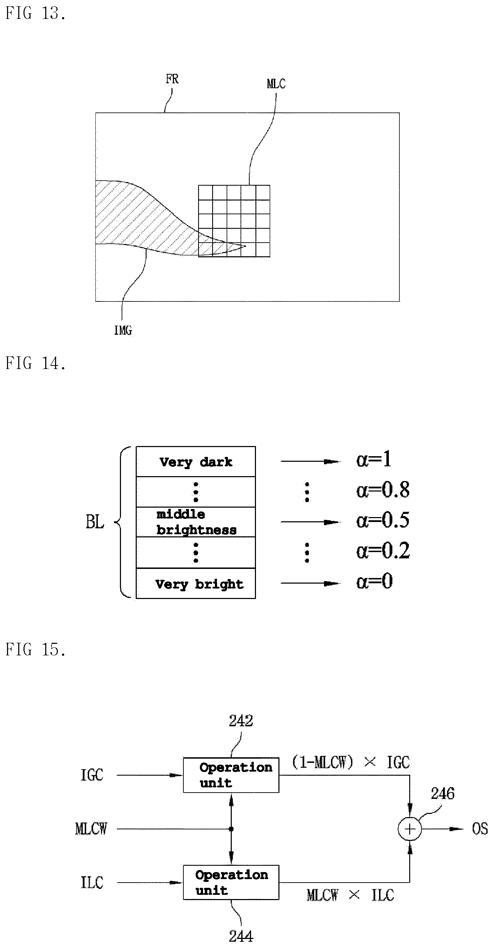

In this case, as illustrated in FIG. 13, the local contrast generation unit 212 may be constructed to calculate a local contrast value LCC by normalizing a proportional relation between the visibility reduction modeling information DIGC and the input frame data IS with respect to the local region MLC set in an image FR. In FIG. 13, IMG may be understood as indicating content that is included in the image FR. Furthermore, the normalization may be understood as distributing proportional values of the visibility reduction modeling information DIGC and the input frame data IS in a preset range.

Furthermore, the local contrast map generation unit 214 may be constructed to generate the local contrast map MLC to which the local contrast value LCC has been mapped so that the local contrast map MLC corresponds to the input frame data IS.

Furthermore, the local contrast weighted map provision unit 220 may be constructed to receive the image brightness level information BL included in the content information CI of the global visibility improvement unit 100 and to provide the local contrast weighted map MLCW corresponding to the input frame data IS by applying a weight corresponding to the image brightness level information BL to the local contrast map MLC.

More specifically, the local contrast weighted map provision unit 220 may generate the local contrast weighted map MLCW by multiplying the local contrast map MLC by the weight. In this case, the weight may be set by a weight operation equation, that is, "α × IS + (1 - brightness value α) × (1 - IS)" wherein "α" is the brightness value and "IS" is the input frame data.

The brightness value α may be set to be smaller as a preset range of the image brightness level information BL becomes brighter and to be greater as the preset range of the image brightness level information BL becomes darker as illustrated in FIG. 14.

When the local contrast weighted map MLCW is calculated in order to improve the visibility for the high grayscale region and low grayscale region of the global compensation information IGC through the local contrast map provision unit 210 and the local contrast weighted map provision unit 220 as described above, the image blender 240 may generate the output frame data OS converted from the input frame data IS through a blending operation equation.

The image blender 240 may be exemplified as being constructed as illustrated in FIG. 15 in order to process the blending operation equation. That is, the image blender 240 may be understood as including operation units 242 and 244 and a sum unit 246.

The blending operation equation may be defined as "local compensation information ILC × local contrast weighted map MLCW + global compensation information IGL × (1 - local contrast weighted map MLCW)".

The operation unit 244 is constructed to receive the local compensation information ILC and the local contrast weighted map MLCW and to output "the local compensation information ILC × the local contrast weighted map MLCW" by its internal operation.

Furthermore, the operation unit 242 is constructed to receive the global compensation information ILC and the local contrast weighted map MLCW and to output "the global compensation information IGL × (1 - the local contrast weighted map MLCW)" by its internal operation.

Furthermore, the sum unit 246 may generate the output frame data OS by summing the outputs of the operation units 242 and 244.

As a result, the local visibility improvement unit 200 may provide the output frame data OS having improved visibility for the high grayscale region and low grayscale region of the global compensation information IGC.

In an embodiment of the present disclosure, the content information CI including the class information CL and the image brightness level information BL corresponding to content that is represented in an image is generated by using the input frame data IS for the image. In this case, the class information CL uses the input frame data IS as an input, and may be generated by the first DNN that has been modeled to identify content.

Furthermore, in an embodiment of the present disclosure, global compensation information may be generated by performing a global compensation by using the input frame data IS, the class information CL, the image brightness level information BL, and the illumination signal LENH of an image.

In an embodiment of the present disclosure, for the global compensation, the global compensation graph data GD including the chroma table ST and the brightness table VT may be generated by the second DNN that uses the input frame data IS, the class information CL, the image brightness level information BL, and the illumination signal LENH as an input. A global compensation graph including the chroma global compensation graph GST and the brightness global compensation graph GVT may be generated by using the global compensation graph data GD. The global compensation information IGC that is obtained by operating the input frame data IS by using the global compensation graph may be output.

According to embodiments of the present disclosure, it is possible to improve the visibility of an image adaptively to content that is represented in the image. Therefore, there is an advantage in that a visibility problem occurring due to complex elements can be solved.

Furthermore, an embodiment of the present disclosure has effects in that it can provide the best visibility corresponding to content of an image and ambient illumination and can provide improved visibility according to a global compensation and a local compensation by incorporating content characteristics into both the global compensation and the local compensation.

Furthermore, an embodiment of the present disclosure has an effect in that it can provide improved visibility according to a local compensation by incorporating the results of a global compensation that is adaptive to content displayed in an image into the local compensation.

Furthermore, an embodiment of the present disclosure has an effect in that it can provide an image having high quality as the visibility of the image is improved as described above.

## Claims

1. A display device comprising:
a global visibility improvement unit 100 configured to generate content information corresponding to content that is represented in an image by using input frame data IS for the image and to generate global compensation information IGC by performing a global compensation using the input frame data, the content information, and an illumination signal of the image; and
a local visibility improvement unit 200 configured to generate local compensation information ILC by performing a local compensation on the input frame data and to generate output frame data OS by blending the global compensation information and the local compensation information.

2. The display device of claim 1, wherein the global visibility improvement unit 100 comprises:
an image characteristic information extractor 110 comprising a first deep neural network (DNN) that has been modeled to identify the content and configured to generate the content information corresponding to the content of the input frame data by the first DNN using the input frame data as an input,
a global compensation graph data generator 120 comprising a second DNN that has been modeled and configured to generate global compensation graph data GD by the second DNN using the illumination signal, the input frame data, and the content information as an input;
a global compensation graph generator 130 configured to generate a global compensation graph corresponding to the global compensation graph data; and
a global compensation operator 140 configured to output the global compensation information that is obtained by operating the input frame data by using the global compensation graph.

3. The display device of claim 2, wherein the image characteristic information extractor 110 generates the content information comprising class information CL corresponding to the content of the input frame data and image brightness level information BL of the input frame data.

4. The display device of claim 3, wherein the image characteristic information extractor 100 comprises:
a class analysis unit 112 comprising the first DNN and configured to generate the class information corresponding to the content of the input frame data by the first DNN; and
an average brightness operation unit 114 configured to operate average brightness of the input frame data and to generate the image brightness level information as results of the operation.

5. The display device of any of claims 2 to 4, wherein:
the global compensation graph data generator 120 generates the global compensation graph data GD comprising a brightness table VT and a chroma table ST, and
each of the brightness table and the chroma table is set to have values corresponding to a plurality of preset levels in a luminance range of the input frame data.

6. The display device of claim 5, wherein:
the global compensation graph generator 130 provides the global compensation graph corresponding to the brightness table and the chroma table, and
the global compensation operator 140 converts first brightness and first chroma of the input frame data IS into second brightness and second chroma corresponding to the brightness table and the chroma table and outputs the global compensation information having values corresponding to the second brightness and the second chroma.

7. The display device of any of the preceding claims, wherein:
the global visibility improvement unit 100 further comprises a visibility reduction modeling unit 150, and
the visibility reduction modeling unit generates visibility reduction modeling information DIGC that is necessary for compensations of a preset high luminance region and preset low luminance region of the global compensation information and outputs the visibility reduction modeling information.

8. The display device of claim 7, wherein, the local visibility improvement unit 200 comprises:
a local compensation unit 230 configured to generate the local compensation information by performing a local compensation on the input frame data;
a local contrast map provision unit 210 configured to provide a local contrast map by normalizing a proportional relation between the visibility reduction modeling information and the input frame data;
a local contrast weighted map provision unit 220 configured to receive image brightness level information included in the content information and to provide a local contrast weighted map in which a weight corresponding to the image brightness level information has been applied to the local contrast map; and
an image blender 240 configured to generate the output frame data converted from the input frame data by blending the global compensation information, the local compensation information, and the local contrast weighted map.

9. The display device of claim 8, wherein:
the local contrast weighted map provision unit 220 generates the local contrast weighted map by multiplying the local contrast map by the weight,
the weight is set by a weight operation equation that is defined as "a brightness value × the input frame data + (1 - the brightness value) × (1 - the input frame data)", and
the brightness value is set to be smaller as a preset range of the image brightness level information becomes brighter and to be greater as the preset range of the image brightness level information becomes darker.

10. The display device of claim 8 or 9, wherein:
the image blender 240 generates the output frame data converted from the input frame data by a blending operation equation, and
the blending operation equation is defined as "the local compensation information × the local contrast weighted map + (1 - the local compensation information) × the global compensation information".

11. A method of improving a visibility of an image for a display device, the method comprising:
generating content information comprising class information and image brightness level information corresponding to content that is represented in an image by using input frame data for the image; and
generating global compensation information by performing a global compensation on the input frame data, the class information, the image brightness level information, and an illumination signal of the image.

12. The method of claim 11, wherein:
the class information is generated by a first deep neural network (DNN) that uses the input frame data as an input and that has been modeled to identify the content, and
the image brightness level information is generated by operating average brightness of the input frame data.

13. The method of claim 11 or 12, wherein the generating of the global compensation information comprises:
generating global compensation graph data comprising a chroma table and a brightness table by a second DNN using the input frame data, the class information, the image brightness level information, and the illumination signal as an input;
generating a global compensation graph comprising a chroma global compensation graph and a brightness global compensation graph by using the global compensation graph data; and
outputting the global compensation information that is obtained by operating the input frame data by using the global compensation graph.

14. The method of any of claims 11, wherein the generating of the global compensation information further comprises:
generating visibility reduction modeling information that is necessary for compensations for a preset high luminance region and preset low luminance region of the global compensation information, and
outputting the visibility reduction modeling information.

15. The method of claim 14, further comprising:
providing a local contrast map that is obtained by normalizing a proportional relation between the visibility reduction modeling information and the input frame data;
providing a local contrast weighted map in which a weight corresponding to the image brightness level information has been applied to the local contrast map; and
generating output frame data converted from the input frame data by blending the global compensation information, local compensation information for the input frame data, and the local contrast weighted map.
